# EUROPÄISCHE PATENTSCHRIFT

(11) **EP 4 155 592 B1**
(45) Veröffentlichungstag und Bekanntmachung des Hinweises auf die Patenterteilung: **19.02.2025**
(21) Anmeldenummer: 22195077.7
(22) Anmeldetag: 12.09.2022
(51) Int. Cl.: F16K 31/122, F16K 31/524, B60G 17/052, B60G 17/056, F16K 11/16

(54) **VENTILEINRICHTUNG, SOWIE FAHRZEUG MIT EINER LUFTFEDERUNGSEINRICHTUNG**
VALVE DEVICE, AND VEHICLE HAVING AN AIR SUSPENSION DEVICE
DISPOSITIF DE SOUPAPE ET VÉHICULE DOTÉ D'UN DISPOSITIF DE SUSPENSION PNEUMATIQUE

(30) Priorität: 28.09.2021 DE 102021125122
(43) Veröffentlichungstag der Anmeldung: 29.03.2023
(73) Patentinhaber: ZF CV Systems Europe BV, 1170 Brüssel (BE)
(72) Erfinder: DIET, Felix, 31552 Rodenberg (DE); GERLACH, Steffen, 30169 Hannover (DE); SIEKER, Armin, 33611 Bielefeld (DE); STENDER, Axel, 31787 Hameln (DE)
(74) Vertreter: Ohlendorf, Henrike

(56) Entgegenhaltungen:
- EP-A1- 2 263 893
- EP-A2- 1 382 469
- CN-A- 103 253 102

## Beschreibung

Die Erfindung betrifft eine Ventileinrichtung sowie ein Fahrzeug mit einer Luftfederungseinrichtung, die eine derartige Ventileinrichtung aufweist. Die Ventileinrichtung ist beispielsweise als ein Niveauregulierungsventil für eine Luftfederungseinrichtung eines Lastkraftfahrzeugs ausgestaltet.

Luftfederungseinrichtungen für Lastkraftfahrzeuge sind seit vielen Jahren bekannt und werden insbesondere im oberen Tonnagesegment für den Gütertransport verwendet. Vorteile sind insbesondere eine optimale Federung unabhängig vom Straßen- und Beladungszustand, die zur Erhöhung des Fahrkomforts und Schonung des Ladeguts führt.

Moderne, elektronisch geregelte Luftfederungseinrichtungen dieser Art verwenden elektrische und/oder pneumatisch arbeitende Ansteuerungen für eine Steuerung von Luftfederbälgen und weisen üblicherweise auch ein mit der Hand zu betätigendes Niveauregulierungsventil auf, das vier Stellungen aufweist:
- Heben: die Luftfederbälge werden aus einem Luftvorrat belüftet,
- Senken: die Luftfederbälge werden an die Umgebung entlüftet,
- Stoppstellung: die Luftfederbälge sind von der Umgebung und dem Luftvorrat abgeschnitten, und
- Fahrtstellung: die Luftfederbälge sind mit einem Luftfederventil verbunden.

Dieses Niveauregulierungsventil soll immer, also auch bei einer fehlenden elektrischen und pneumatischen Versorgung, bedienbar sein.

Durch das gleichzeitige Vorhandensein mehrerer Kontrollmöglichkeiten benötigt man, um einen sicheren Betrieb des Lastkraftfahrzeugs zu gewährleisten, ein definiertes Verhalten im Falle von gegensätzlichen Kontrollbefehlen. Folgende Szenarien sind hierbei denkbar, bei denen gegensätzliche Kontrollbefehle auftreten können:
1) Das Fahrzeug wird durch die elektronische Luftfederungseinrichtung gesenkt. Der Fahrer erkennt jedoch, dass ein Mensch unter dem Anhänger liegt. Der Fahrer möchte daher die Bewegung durch intuitive Betätigung des Bedienelements in die Heben-Stellung stoppen.
2) Das Fahrzeug wird durch die elektronische Luftfederungseinrichtung gehoben. Der Fahrer erkennt jedoch, dass das Fahrzeug gleich unter die Werkstattdecke stößt. Der Fahrer möchte daher die Bewegung durch intuitive Betätigung des Bedienelements in die Senken-Stellung stoppen.
3) Der Fahrer hebt das Fahrzeug über das Bedienelement, jedoch ist das zulässige obere Niveau erreicht. Die elektronische Luftfederungseinrichtung kann daher den Hebevorgang stoppen.
4) Der Fahrer senkt das Fahrzeug über das Bedienelement, jedoch ist das zulässige untere Niveau erreicht. Die elektronische Luftfederungseinrichtung kann daher den Senkvorgang stoppen.

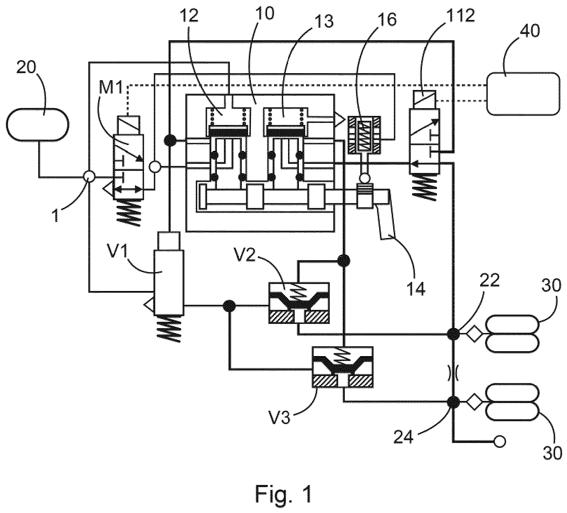

Ein prinzipieller Aufbau einer Luftfederungseinrichtung für ein Lastkraftfahrzeug nach dem Stand der Technik, die sowohl eine elektronische Niveauregelung als auch eine manuelle Steuerung per Handhebel über ein Luftfederungs-Regelventil 10 an einem Fahrzeug ermöglicht, ist in der Fig. 1 dargestellt. Die Luftfederungseinrichtung weist einen Drucklufteinlass 1 auf, über den der Luftfederungseinrichtung aus einem Luftreservoir 20 Druckluft zugeführt wird. Diese Druckluft liegt an dem Luftfederungs-Regelventil 10 an, durch das über Ventile V1, V2 und V3 der Luftfederungseinrichtung eine Belüftung und Entlüftung von Luftfederbälgen 30 über Belüftungsanschlüsse 22, 24 steuerbar ist.

Das Luftfederungs-Regelventil 10 weist zwei Ventile 12, 13 auf, wobei über das Ventil 12 die Belüftung und über das Ventil 13 die Entlüftung der Luftfederbälge 30 gesteuert wird. Das Luftfederungs-Regelventil 10 ist hierbei sowohl über ein elektronisches Steuergerät 40, durch das Magnetventile M1, M2 für eine Steuerung betätigt werden können, als auch über einen Handhebel 14 kontrollierbar. Das Luftfederungs-Regelventil 10 weist außerdem eine RTR-Steuerung 16 (RTR: Return-To-Ride) auf, über die der Fahrzeugaufbau automatisch in ein sicheres Fahrniveau gebracht werden kann.

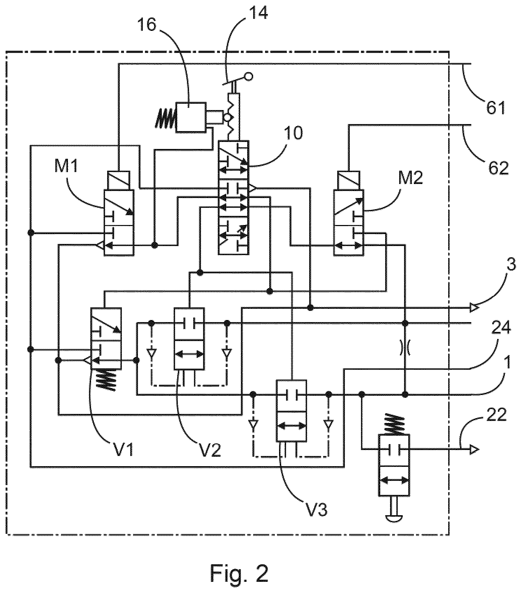

Ein Schaltbild der Luftfederungseinrichtung der Fig. 1 ist in der Fig. 2 dargestellt. Die Magnetventile M1, M2 werden hierbei über elektrische Anschlüsse 61, 62 gesteuert. Die Luftfederungseinrichtung erhält Druckluft über den Drucklufteinlass 1, und das Luftfederungs-Regelventil 10 steuert über die Belüftungsanschlüsse 22, 24 die Luftfederbälge, in der Fig. 2 nicht dargestellt. Die Entlüftung der Luftfederbälge wird über den Entlüftungsauslass 3 bewirkt. Die weiteren Bezugszeichen entsprechen denen der Fig. 1.

Das Luftfederungs-Regelventil 10 ist verhältnismäßig kompliziert aufgebaut und daher kostenintensiv in der Herstellung. Es hat verhältnismäßig große Abmaße und insbesondere dessen Länge kann in der Praxis zu Problemen bei der Verrohrung führen. Es hat außerdem den Nachteil, dass es keine Möglichkeit für eine definierte Begrenzung des oberen und/oder unteren Niveaus durch das Steuergerät 40 bietet, falls ein Bediener beispielsweise den Fahrzeugaufbau manuell über ein oberes zulässiges Niveau heben will.

Eine andere Luftfederungseinrichtung nach dem Stand der Technik verwendet ein Luftfederungs-Regelventil mit einer pneumatischen Steuerung und pneumatische Taster für ein manuelles Heben und Senken des Lastkraftfahrzeugs. Diese Luftfederungseinrichtung hat ebenfalls den Nachteil, dass bei gegensätzlichen Kontrollbefehlen das Heben Vorrang hat. Ein weiterer Nachteil dieses Systems ist, dass zum Senken des Fahrzeugaufbaus ein Vorratsdruck benötigt wird.

EP 2 263 893 A1 offenbart eine Schaltventileinheit zum Be- und Entlüften von Luftfederbälgen zum Heben und Senken eines Aufbaus eines Fahrzeugs. Die

Schaltventileinheit ist durch manuelle Betätigung einer Betätigungseinrichtung betätigbar.

CN 103 253 102 B offenbart eine Ventileinrichtung, die manuell oder durch einen elektrischen Betriebsmechanismus in Positionen "Heben", "Senken" und "Fahren" gebracht werden kann.

EP 1 382 469 A2 offenbart ein Magnetventil für Nutzfahrzeuge mit Luftfederung mit zwei Anschlüssen.

Es besteht somit ein Bedarf für eine Luftfederungseinrichtung mit einer Ventileinrichtung, die sowohl eine elektropneumatische als auch eine manuelle Steuerung aufweist und die im Falle von gegensätzlichen Kontrollbefehlen trotzdem einen sicheren Betrieb gewährleistet.

Aufgabe der Erfindung ist es daher, eine derartige Ventileinrichtung sowie ein Fahrzeug mit einer derartigen Ventileinrichtung anzugeben.

Diese Aufgabe wird durch eine Ventileinrichtung gemäß Anspruch 1 sowie ein Fahrzeug gemäß Anspruch 9 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft eine Ventileinrichtung, insbesondere für ein Fahrzeug, umfassend ein Gehäuse mit einem ersten Ventil und einem zweiten Ventil; wobei das Gehäuse einen Drucklufteinlass, einen Druckluftluftauslass und einen Entlüftungsauslass aufweist und jedes der Ventile einen Kolben und eine Rückstellfeder umfasst und die Ventileinrichtung in einer Grundstellung, wenn sie nicht betätigt ist, keinen Durchfluss aufweist, und wobei die Ventileinrichtung zur Betätigung der Ventile eine mechanische Ansteuerung mit mindestens einem manuellen Bedienelement und eine elektropneumatische Ansteuerung aufweist, und das erste Ventil als ein Belüftungsventil und das zweite Ventil als ein Entlüftungsventil ausgestaltet sind, und wobei beide Ventile sperren, wenn beide Ansteuerungen betätigt sind.

In einer vorteilhaften Ausführungsform ist das zweite Ventil innerhalb des Gehäuses über zwei pneumatische Verbindungen derart mit dem ersten Ventil verbunden, dass bei einer Betätigung des ersten Ventils Druckluft vom Drucklufteinlass durch das erste und zweite Ventil zum Druckluftauslass durchgeleitet wird und bei Betätigung des zweiten Ventils Druckluft vom Druckluftauslass durch das zweite und erste Ventil zum Entlüftungsauslass durchgeleitet wird.

Das erste Ventil und das zweite Ventil sind über zwei pneumatischen Verbindungen in Reihe geschaltet, und die pneumatischen Verbindungen zwischen dem ersten Ventil und dem zweiten Ventil sind invertiert.

In einem vorteilhaften Ausführungsbeispiel ist das erste Ventil ein 4/2-Ventil und das zweite Ventil ein 4/2- oder ein 3/2-Ventil.

In einer weiteren bevorzugten Ausgestaltung enthält das erste Ventil einen Kolben, der einen ersten Druckluftkanal für einen Belüftungsvorgang und einen zweiten Druckluftkanal für einen Entlüftungsvorgang aufweist, und wobei bei nicht betätigtem erstem Ventil der erste Druckluftkanal gesperrt ist und der zweite Druckluftkanal geöffnet ist und bei betätigtem erstem Ventil der erste Druckluftkanal geöffnet ist und der zweite Druckluftkanal gesperrt ist.

In einer weiteren bevorzugten Ausgestaltung enthält das zweite Ventil einen Kolben, der einen dritten Druckluftkanal für einen Belüftungsvorgang und einen vierten Druckluftkanal für einen Entlüftungsvorgang aufweist, und wobei bei nicht betätigtem zweitem Ventil der dritte Druckluftkanal geöffnet ist und der vierte Druckluftkanal gesperrt ist und bei betätigtem zweitem Ventil der dritte Druckluftkanal gesperrt ist und der vierte Druckluftkanal geöffnet ist.

In einer weiteren bevorzugten Ausgestaltung ist bei einer Betätigung des ersten Ventils der erste Druckluftkanal mit dem dritten Druckluftkanal über die erste pneumatische Verbindung verbunden und bei einer Betätigung des zweiten Ventils ist der vierte Druckluftkanal mit dem zweiten Druckluftkanal über die zweite pneumatische Verbindung verbunden.

In einem vorteilhaften Ausführungsbeispiel umfasst die mechanische Ansteuerung zwei Taster und zwei Stößel, oder einen Hebel, eine Welle, eine Kurvenscheibe, eine Drehfeder und jeweils einen Stößel für die Ventile.

In einem weiteren vorteilhaften Ausführungsbeispiel umfasst die elektropneumatische Ansteuerung für jedes der Ventile ein Magnetventil zur Steuerung einer Druckluftzufuhr für die Ventile.

Die Ventileinrichtung gemäß der Erfindung ist vorteilhafterweise für ein Fahrzeug, insbesondere ein Lastkraftfahrzeug, sowie Anhängefahrzeuge mit einer Luftfederungseinrichtung verwendbar.

Ausführungsbeispiele der Erfindung sind in den Zeichnungen schematisch dargestellt und werden nachfolgend anhand der Figuren näher erläutert.

Es zeigen:
- Fig. 1: einen prinzipiellen Aufbau einer Luftfederungseinrichtung nach dem Stand der Technik;
- Fig. 2: ein Schaltbild der Luftfederungseinrichtung der Fig. 1;
- Fig. 3: eine mögliche Ausgestaltung einer Ventileinrichtung nach der Erfindung;
- Fig. 4: ein bevorzugtes Ausführungsbeispiel der Ventileinrichtung der Fig. 3 in einer Aufsicht; und
- Fig. 5: die Ventileinrichtung der Fig. 4 in einem Querschnitt.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

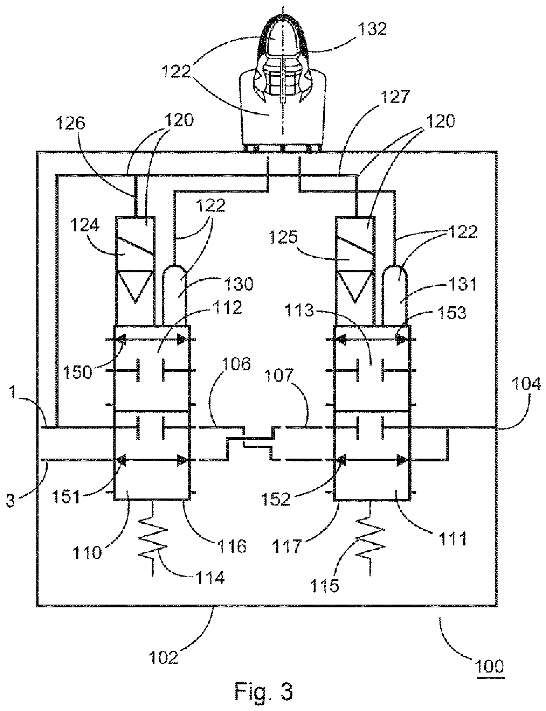

Fig. 3 zeigt schematisch eine Ventileinrichtung 100 mit einem Gehäuse 102, in dem ein erstes Ventil 110 und ein zweites Ventil 111 angeordnet sind und das einen Drucklufteinlass 1 für eine Druckluftzufuhr, einen Druckluftauslass 104 und einen Entlüftungsauslass 3 aufweist. Das erste Ventil 110 ist insbesondere ein Belüftungsventil und weist einen Anschluss auf, der mit dem Drucklufteinlass 1 verbunden ist, und einen Anschluss, der mit dem Entlüftungsauslass 3 verbunden ist. Das zweite Ventil 111 ist insbesondere ein Entlüftungsventil und weist zwei Anschlüsse auf, die über zwei pneumatische Verbindungen 106, 107 innerhalb der Ventileinrichtung 100 mit zwei Anschlüssen des Ventils 111 verbunden sind, und zwei Anschlüsse, die mit dem Druckluftauslass 104 verbunden sind. Die pneumatischen Verbindungen 106, 107 und die Anschlüsse der Ventile 110, 111 sind insbesondere derart ausgestaltet, dass bei Betätigung des Ventils 110 Druckluft vom Drucklufteinlass 1 durch die Ventile 110, 111 zum Druckluftauslass 104 durchgeleitet wird und bei Betätigung des Ventils 111 Druckluft vom Druckluftluftauslass 104 durch die Ventile 110, 111 zum Entlüftungsauslass 3 durchgeleitet wird.

Die beiden Ventile 110, 111 sind in diesem Ausführungsbeispiel 4/2-Ventile und weisen jeweils einen Kolben 112 bzw. 113 auf, in der Fig. 1 nur schematisch dargestellt, mit jeweils einer Rückstellfeder 114 bzw. 115, und ein Ventilgehäuse 116 bzw. 117, in dem sich jeweils der Kolben 112 bzw. 113 bewegt. Das Ventil 111 kann alternativ aber auch als ein 3/2-Ventil mit nur einem Anschluss für den Druckluftluftauslass 104 ausgestaltet sein.

Eine Ventileinrichtung dieser Art ist insbesondere für Luftfederungsanlagen von Kraftfahrzeugen verwendbar. Wird das Ventil 110 betätigt und hierdurch dessen Kolben 112 verschoben, so wird über die Anschlüsse 1 und 104 ein Druck für eine Luftfederung aufgebaut. Wird das Ventil 111 betätigt und dessen Kolben 113 verschoben, so wird über die Anschlüsse 104 und 3 Druck abgelassen. Wird keines der Ventile 110, 111 betätigt, so wird der Druck an dem Druckluftauslass 104 aufrechterhalten.

Das Ventil 110 ist hierbei derart ausgestaltet, dass es in einer Grundstellung eine Entlüftung durch die Ventile 110 und 111 ermöglicht und bei einer Betätigung des Ventils 110 eine Belüftung über die Ventile 110 und 111 ermöglicht. Das Ventil 111 ist derart ausgestaltet, dass es in einer Grundstellung eine Belüftung durch die Ventile 110 und 111 ermöglicht und bei einer Betätigung des Ventils 111 eine Entlüftung über die Ventile 110 und 111 ermöglicht. Werden beide Ventile 110, 111 betätigt, so findet kein Durchfluss statt.

Zur Betätigung des Kolbens weist jedes der Ventile 110, 111 zur Steuerung einer Druckluftzufuhr und einer Entlüftung sowohl eine elektropneumatische Ansteuerung 120 als auch eine mechanische Ansteuerung 122 auf. Die elektropneumatische Ansteuerung 120 weist für das Ventil 110 hierbei ein Magnetventil 124 und eine pneumatische Leitung 126 auf und für das Ventil 111 ein Magnetventil 125 und eine pneumatische Leitung 127. Die mechanische Ansteuerung 122 weist ein manuelles Bedienelement, beispielsweise mit einem Hebel oder zwei Taster auf. Die Magnetventile 124, 125 können beispielsweise durch ein elektronisches Steuergerät, in der Fig. 3 nicht dargestellt, betätigt werden. Durch die Betätigung der Ventile 110 bzw. 111 kann beispielsweise ein Fahrzeugaufbau eines Lastkraftwagens gehoben oder gesenkt werden.

In dem Ausführungsbeispiel der Fig. 3 enthält die mechanische Ansteuerung 122 einen Stößel 130 für das Ventil 110 und einen Stößel 131 für das Ventil 111. Zur Betätigung der Stößel 130, 131 weist die mechanische Ansteuerung 122 einen Drehmechanismus 132 mit einem Hebel, in der Fig. 3 nicht dargestellt, auf. Der Drehmechanismus 132 enthält beispielsweise eine Kurvenscheibe, über die bei einer Drehung des Hebels in eine Drehrichtung der Stößel 130 den Kolben 112 verschiebt, und über die bei einer Drehung des Hebels in die andere Drehrichtung der Stößel 131 den Kolben 113 verschiebt.

Die Ventileinrichtung 100 hat hierdurch die Eigenschaft, dass bei einer gleichzeitigen gegensätzlichen Bedienung durch das Steuergerät und durch eine manuelle Bedienung die Ventileinrichtung 100 in eine Stoppstellung geführt wird. Insbesondere werden bei gegensätzlichen Kontrollbefehlen zwischen dem Steuergerät und einem Bediener der mechanischen Ansteuerung 122 der Ventileinrichtung 100 beide Kolben 112, 113 verschoben, so dass kein Durchfluss durch die Ventileinrichtung 100 stattfindet.

In dem Ausführungsbeispiel der Fig. 3 enthält der Kolben 112 des ersten Ventils 110 einen ersten Druckluftkanal 150 für einen Belüftungsvorgang und einen zweiten Druckluftkanal 151 für einen Entlüftungsvorgang. Die Druckluftkanäle 150, 151 sind derart ausgestaltet, dass bei nicht betätigtem erstem Ventil 110 hierbei der erste Druckluftkanal 150 gesperrt ist und der zweite Druckluftkanal 151 geöffnet ist, und bei betätigtem erstem Ventil 110 der erste Druckluftkanal 150 geöffnet ist und der zweite Druckluftkanal 151 gesperrt ist.

Der Kolben 113 des zweiten Ventils 111 enthält einen dritten Druckluftkanal 152 für einen Belüftungsvorgang und einen vierten Druckluftkanal 153 für einen Entlüftungsvorgang. Die Druckluftkanäle 152, 153 sind derart ausgestaltet, dass bei nicht betätigtem zweitem Ventil 111 hierbei der dritte Druckluftkanal 152 geöffnet ist und der vierte Druckluftkanal 153 gesperrt ist, und bei betätigtem zweitem Ventil 111 der dritte Druckluftkanal 152 gesperrt ist und der vierte Druckluftkanal 153 geöffnet ist.

Wenn das erste Ventil 110 betätigt wird, verbindet die pneumatische Verbindung 106 hierbei den ersten Druckluftkanal 150 mit dem dritten Druckluftkanal 152, so dass eine Belüftung stattfindet, und wenn das zweite Ventil 111 betätigt wird, verbindet die pneumatische Verbindung 107 den vierten Druckluftkanal 153 mit dem zweiten Druckluftkanal 151, so dass eine Entlüftung stattfindet.

Durch die Verwendung von zwei 4/2-Ventilen oder einem 4/2- und einem 3/2-Ventil ist die Schaltung der Ventileinrichtung 100 deutlich vereinfacht im Vergleich zu bekannten Ventileinrichtungen dieser Art, so dass eine deutliche Senkung der Kosten sowie eine Reduzierung der Abmaße ermöglicht wird. Hierdurch werden die Systemkosten beispielsweise für Anhängefahrzeuge mit einer elektronisch geregelten Luftfederung reduziert, und diese Systeme werden für Kunden attraktiver.

Die Ventileinrichtung 100 bietet zudem zusätzliche Funktionen:
- eine Höhenlimitierung durch das Steuergerät bei einem manuellen Heben,
- bei gegensätzlichen Kontrollbefehlen wird die Bewegung des Fahrzeugaufbaus gestoppt, und
- die Hebe- und Senkgeschwindigkeit des Fahrzeugaufbaus kann proportional zum Betätigungsweg des Bedienelementes durchgeführt werden.

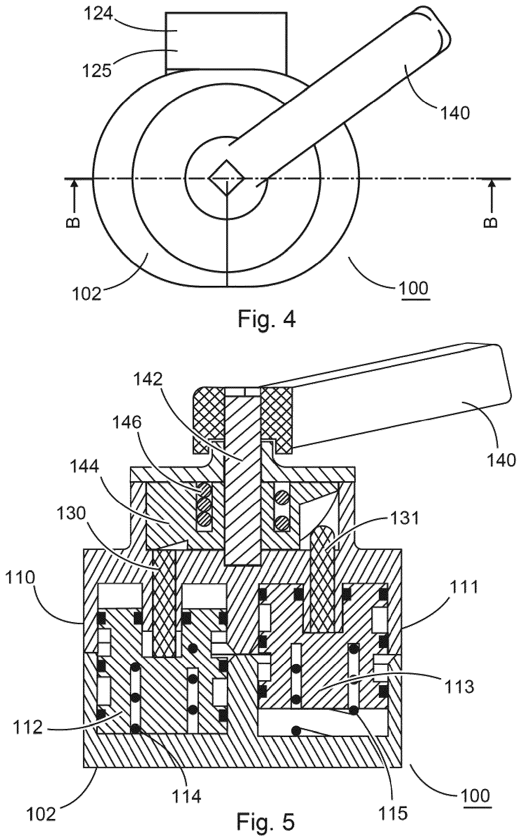

Ein bevorzugtes Ausführungsbeispiel der Ventileinrichtung 100 ist in der Fig. 4 in einer Aufsicht dargestellt. Die Magnetventile 124, 125 der Ventileinrichtung 100 sind hierbei an einer Seite des Gehäuses 102 angeordnet. Die mechanischen Ansteuerung 122 der Fig. 3, deren Stößel im Gehäuse 102 integriert sind, weist hierbei einen Hebel 140 auf, der von einem Bediener betätigt werden kann.

Die Ventileinrichtung 100 der Fig. 4 ist in der Fig. 5 in einem Querschnitt durch eine Schnittachse B - B der Ventileinrichtung 100 dargestellt. Die beiden Ventile 110, 111 sind in dem Gehäuse 102 der Ventileinrichtung 100 angeordnet, wobei die Ventilgehäuse der Ventile 110, 111 im Wesentlichen durch das Gehäuse 102 ausgestaltet sind. Die Kolben 112 bzw. 113 sind jeweils über die Stößel 130 bzw. 131 durch den Hebel 140 der mechanischen Ansteuerung 122 verschiebbar.

Die mechanische Ansteuerung 122 weist in diesem Ausführungsbeispiel außerdem eine Welle 142, eine Kurvenscheibe 144 sowie eine Drehfeder 146 auf. Die Kurvenscheibe 144 ist an der Welle 142 befestigt und bei einer Betätigung des Hebels 140 wird durch die Kurvenscheibe 144 entweder der Stößel 130 oder der Stößel 131 verschoben. Hierbei wird eine Drehbewegung des Hebels 140 durch die Kurvenscheibe 144 in eine translatorische Bewegung umgesetzt. Die Drehfeder 146 bewirkt eine Kraft in Richtung der Grundstellung des Hebels 140, in der auf keinen der Stößel 130, 131 eine Kraft wirkt.

Die Kurvenscheibe 144 weist hierbei eine Fläche mit einer Steuerung auf, derart, dass bei einer Betätigung des Hebels 140 in eine Drehrichtung, zum Beispiel im Uhrzeigersinn, der Stößel 130 und hierdurch der Kolben 112 verschoben wird und bei einer Betätigung des Hebels 140 in die andere Drehrichtung, gegen den Uhrzeigersinn, der Stößel 131 und hierdurch der Kolben 113 verschoben wird. Die Betätigung des Hebels 140 im Uhrzeigersinn bewirkt hierbei einen Belüftungsvorgang mittels des Ventils 110 und die Betätigung des Hebels 140 gegen den Uhrzeigersinn bewirkt einen Entlüftungsvorgang mittels des Ventils 111. Ist der Hebel 140 in der Grundstellung, so wird der eingestellte Druck gehalten.

In dem Ausführungsbeispiel der Fig. 4 und der Fig. 5 sind die Kolben 112, 113 axial zur Welle 142 angeordnet. Über den Hebel 140 und die Kurvenscheibe 144 ist jeweils einer der Stößel 130, 131 und hierdurch einer der Kolben 112, 113 des ersten bzw. zweiten Ventils 110, 111 betätigbar. Hierdurch wird bei einer Betätigung des Hebels 140 eine Transformation von einer rotatorischen in eine translatorische Bewegung durchgeführt.

Ein weiterer Vorteil dieses Prinzips ist die Möglichkeit zur Abstufung der Hebe- bzw. Senkgeschwindigkeit. Durch eine Anpassung der Geometrie der Kurvenscheibe 144 kann jeder Hebelstellung eine definierte Kolbenstellung zugeordnet werden. Eine nur teilweise Verschiebung eines der Kolben 112, 113 führt zu einem reduzierten Durchfluss durch die Ventileinrichtung 100.

### Bezugszeichenliste (Teil der Beschreibung)

- M1, M2: Magnetventile
- V1, V2, V3: Ventile
- 1: Drucklufteinlass
- 3: Entlüftungsauslass
- 10: Luftfederungs-Regelventil
- 12, 13: Ventile
- 14: Handhebel
- 16: RTR-Steuerung
- 20: Luftreservoir
- 22, 24: Belüftungsanschlüsse
- 30: Luftfederbälge
- 40: elektronisches Steuergerät
- 61, 62: elektrische Anschlüsse
- 100: Ventileinrichtung
- 102: Gehäuse
- 104: Druckluftauslass
- 106, 107: pneumatische Verbindungen
- 110, 111: Ventile
- 112, 113: Kolben
- 114, 115: Rückstellfedern
- 116, 117: Ventilgehäuse
- 120: elektropneumatische Ansteuerung
- 122: mechanische Ansteuerung
- 124, 125: Magnetventile
- 126, 127: pneumatische Leitungen
- 130, 131: Stößel
- 132: Drehmechanismus
- 140: Hebel
- 142: Welle
- 144: Kurvenscheibe
- 146: Drehfeder
- 150, 151: Druckluftkanäle im ersten Kolben
- 152, 153: Druckluftkanäle im zweiten Kolben

## Patentansprüche

1. Ventileinrichtung (100), insbesondere für ein Fahrzeug, umfassend ein Gehäuse (102) mit einem ersten Ventil (110) und einem zweiten Ventil (111), wobei das Gehäuse (102) einen Drucklufteinlass (1), einen Druckluftluftauslass (104) und einen Entlüftungsauslass (3) aufweist und jedes der Ventile (110,111) jeweils einen Kolben (112, 113) und eine Rückstellfeder (114, 115) umfasst und die Ventileinrichtung in einer Grundstellung, wenn sie nicht betätigt ist, keinen Durchfluss aufweist, und wobei
die Ventileinrichtung zur Betätigung der Ventile (110,111) eine mechanische Ansteuerung (122) mit mindestens einem manuellen Bedienelement (132) und eine elektropneumatische Ansteuerung (120) aufweist, und
das erste Ventil (110) als ein Belüftungsventil und das zweite Ventil (111) als ein Entlüftungsventil ausgestaltet sind, und wobei beide Ventile (110,111) sperren, wenn beide Ansteuerungen (120, 122) betätigt sind,
**dadurch gekennzeichnet, dass** das erste Ventil (110) und das zweite Ventil (111) über eine erste und eine zweite pneumatische Verbindung (106, 107) in Reihe geschaltet sind, wobei die zwei pneumatischen Verbindungen (106, 107) zwischen dem ersten Ventil (110) und dem zweiten Ventil (111) invertiert sind.

2. Ventileinrichtung (100) nach Anspruch 1, wobei das zweite Ventil (111) innerhalb des Gehäuses (102) über eine erste und eine zweite pneumatische Verbindung (106, 107) derart mit dem ersten Ventil (110) verbunden ist, dass bei einer Betätigung des ersten Ventils (110) Druckluft vom Drucklufteinlass (1) durch das erste und zweite Ventil (110,111) zum Druckluftauslass (102) durchgeleitet wird und bei einer Betätigung des zweiten Ventils (111) Druckluft vom Druckluftauslass (102) durch das zweite und erste Ventil (110,111) zum Entlüftungsauslass (3) durchgeleitet wird.

3. Ventileinrichtung (100) nach einem der vorangehenden Ansprüche, wobei das erste Ventil (110) einen Kolben (112) enthält, der einen ersten Druckluftkanal (150) für einen Belüftungsvorgang und einen zweiten Druckluftkanal (151) für einen Entlüftungsvorgang aufweist, und wobei bei nicht betätigtem erstem Ventil (110) der erste Druckluftkanal (150) gesperrt ist und der zweite Druckluftkanal (151) geöffnet ist und bei betätigtem erstem Ventil (110) der erste Druckluftkanal (150) geöffnet ist und der zweite Druckluftkanal (151) gesperrt ist.

4. Ventileinrichtung (100) nach Anspruch 3, wobei das zweite Ventil (111) einen Kolben (113) enthält, der einen dritten Druckluftkanal (152) für einen Belüftungsvorgang und einen vierten Druckluftkanal (153) für einen Entlüftungsvorgang aufweist, und wobei bei nicht betätigtem zweitem Ventil (111) der dritte Druckluftkanal (152) geöffnet ist und der vierte Druckluftkanal (153) gesperrt ist und bei betätigtem zweitem Ventil (111) der dritte Druckluftkanal (152) gesperrt ist und der vierte Druckluftkanal (153) geöffnet ist.

5. Ventileinrichtung (100) nach Anspruch 4, wobei bei einer Betätigung des ersten Ventils (110) der erste Druckluftkanal (150) mit dem dritten Druckluftkanal (152) über die erste pneumatische Verbindung (106) verbunden ist, und bei einer Betätigung des zweiten Ventils (111) der vierte Druckluftkanal (153) mit dem zweiten Druckluftkanal (151) über die zweite pneumatische Verbindung (107) verbunden ist.

6. Ventileinrichtung (100) nach einem der vorangehenden Ansprüche, wobei das erste Ventil (110) ein 4/2-Ventil ist und das zweite Ventil (111) ein 4/2- oder ein 3/2-Ventil ist.

7. Ventileinrichtung (100) nach einem der vorangehenden Ansprüche, wobei die mechanische Ansteuerung (122) zwei Taster und zwei Stößel, oder einen Hebel (140), eine Welle (142), eine Kurvenscheibe (144), eine Drehfeder (146) und jeweils einen Stößel (130,131) für die Ventile (110,111) umfasst.

8. Ventileinrichtung (100) nach einem der vorangehenden Ansprüche, wobei die elektropneumatische Ansteuerung (120) für jedes der Ventile (110,111) ein Magnetventil (124,125) zur Steuerung einer Druckluftzufuhr für die Ventile (110,111) aufweist.

9. Fahrzeug, insbesondere Lastkraftfahrzeug, das eine Luftfederungseinrichtung mit einer Ventileinrichtung (100) nach einem der Ansprüche 1 bis 8 aufweist.

## Claims

1. Valve device (100), in particular for a vehicle, comprising a housing (102) having a first valve (110) and a second valve (111), the housing (102) having a compressed air inlet (1), a compressed air outlet (104) and a ventilation outlet (3) and each of the valves (110, 111) comprising a piston (112, 113) and a return spring (114, 115) and the valve device having no flow in a basic position when it is not actuated, and
the valve device for actuating the valves (110, 111) comprising a mechanical control (122) having at least one manual operating element (132) and an electropneumatic control (120), and
the first valve (110) being designed as an aeration valve and the second valve (111) being designed as a ventilation valve, and both valves (110, 111) being blocked when both controls (120, 122) are actuated,
**characterized in that** the first valve (110) and the second valve (111) are connected in series via a first and a second pneumatic connection (106, 107), the two pneumatic connections (106, 107) between the first valve (110) and the second valve (111) being inverted.

2. Valve device (100) according to claim 1, wherein the second valve (111) inside the housing (102) is connected to the first valve (110) via a first and a second pneumatic connection (106, 107) such that when the first valve (110) is actuated, compressed air is passed from the compressed air inlet (1) through the first and second valves (110, 111) to the compressed air outlet (102) and when the second valve (111) is actuated, compressed air is passed from the compressed air outlet (102) through the second and first valves (110, 111) to the ventilation outlet (3).

3. Valve device (100) according to either of the preceding claims, wherein the first valve (110) contains a piston (112) which has a first compressed air channel (150) for an aeration process and a second compressed air channel (151) for a ventilation process, and wherein when the first valve (110) is not actuated, the first compressed air channel (150) is blocked and the second compressed air channel (151) is opened, and when the first valve (110) is actuated, the first compressed air channel (150) is opened and the second compressed air channel (151) is blocked.

4. Valve device (100) according to claim 3, wherein the second valve (111) contains a piston (113) which has a third compressed air channel (152) for an aeration process and a fourth compressed air channel (153) for a ventilation process, and wherein when the second valve (111) is not actuated, the third compressed air channel (152) is opened and the fourth compressed air channel (153) is blocked and when the second valve (111) is actuated, the third compressed air channel (152) is blocked and the fourth compressed air channel (153) is opened.

5. Valve device (100) according to claim 4, wherein when the first valve (110) is actuated, the first compressed air channel (150) is connected to the third compressed air channel (152) via the first pneumatic connection (106), and when the second valve (111) is actuated, the fourth compressed air channel (153) is connected to the second compressed air channel (151) via the second pneumatic connection (107).

6. Valve device (100) according to any of the preceding claims, wherein the first valve (110) is a 4/2 valve and the second valve (111) is a 4/2 or a 3/2 valve.

7. Valve device (100) according to any of the preceding claims, wherein the mechanical control (122) comprises two buttons and two tappets, or a lever (140), a shaft (142), a cam disk (144), a torsion spring (146) and a tappet (130, 131) for each of the valves (110, 111).

8. Valve device (100) according to any of the preceding claims, wherein the electropneumatic control (120) for each of the valves (110, 111) has a solenoid valve (124, 125) for controlling a compressed air supply for the valves (110, 111).

9. Vehicle, in particular a truck, having an air suspension device comprising a valve device (100) according to any of claims 1 to 8.

## Revendications

1. Dispositif de soupape (100), en particulier pour un véhicule, comprenant un carter (102) comportant une première soupape (110) et une seconde soupape (111), dans lequel le carter (102) présente une entrée d'air comprimé (1), une sortie d'air comprimé (104) et une sortie de purge (3), et chacune des soupapes (110, 111) comprend respectivement un piston (112, 113) et un ressort de rappel (114, 115), et le dispositif de soupape ne présente aucun écoulement dans une position initiale lorsqu'il n'est pas actionné, et dans lequel
le dispositif de soupape présente, pour l'actionnement des soupapes (110, 111), une commande mécanique (122) comportant au moins un élément de service (132) manuel et une commande électropneumatique (120), et
la première soupape (110) est conçue comme une soupape d'aération et la seconde soupape (111) est conçue comme une soupape de purge, et dans lequel les deux soupapes (110, 111) se bloquent lorsque les deux commandes (120, 122) sont actionnées,
**caractérisé en ce que** la première soupape (110) et la seconde soupape (111) sont connectées en série par l'intermédiaire d'une première et d'une seconde liaison pneumatique (106, 107), dans lequel les deux liaisons pneumatiques (106, 107) sont inversées entre la première soupape (110) et la seconde soupape (111).

2. Dispositif de soupape (100) selon la revendication 1, dans lequel la seconde soupape (111) est reliée à la première soupape (110) à l'intérieur du carter (102) par l'intermédiaire d'une première et d'une seconde liaison pneumatique (106, 107) de telle sorte que, lors d'un actionnement de la première soupape (110), de l'air comprimé est acheminé de l'entrée d'air comprimé (1) vers la sortie d'air comprimé (102) à travers la première et la seconde soupape (110, 111) et, lors d'un actionnement de la seconde soupape (111), de l'air comprimé est acheminé de la sortie d'air comprimé (102) vers la sortie de purge (3) à travers la seconde et la première soupape (110, 111).

3. Dispositif de soupape (100) selon l'une des revendications précédentes, dans lequel la première soupape (110) contient un piston (112) qui présente un premier canal d'air comprimé (150) pour un processus d'aération et un deuxième canal d'air comprimé (151) pour un processus de purge, et dans lequel, lorsque la première soupape (110) n'est pas actionnée, le premier canal d'air comprimé (150) est bloqué et le deuxième canal d'air comprimé (151) est ouvert et, lorsque la première soupape (110) est actionnée, le premier canal d'air comprimé (150) est ouvert et le deuxième canal d'air comprimé (151) est bloqué.

4. Dispositif de soupape (100) selon la revendication 3, dans lequel la seconde soupape (111) contient un piston (113) qui présente un troisième canal d'air comprimé (152) pour un processus d'aération et un quatrième canal d'air comprimé (153) pour un processus de purge, et dans lequel, lorsque la seconde soupape (111) n'est pas actionnée, le troisième canal d'air comprimé (152) est ouvert et le quatrième canal d'air comprimé (153) est bloqué, et lorsque la seconde soupape (111) est actionnée, le troisième canal d'air comprimé (152) est bloqué et le quatrième canal d'air comprimé (153) est ouvert.

5. Dispositif de soupape (100) selon la revendication 4, dans lequel, lors d'un actionnement de la première soupape (110), le premier canal d'air comprimé (150) est relié au troisième canal d'air comprimé (152) par l'intermédiaire de la première liaison pneumatique (106), et lors d'un actionnement de la seconde soupape (111), le quatrième canal d'air comprimé (153) est relié au deuxième canal d'air comprimé (151) par l'intermédiaire de la seconde liaison pneumatique (107).

6. Dispositif de soupape (100) selon l'une des revendications précédentes, dans lequel la première soupape (110) est une soupape 4/2 et la seconde soupape (111) est une soupape 4/2 ou une soupape 3/2.

7. Dispositif de soupape (100) selon l'une des revendications précédentes, dans lequel la commande mécanique (122) comprend deux palpeurs et deux poussoirs, ou un levier (140), un arbre (142), une came (144), un ressort de torsion (146) et respectivement un poussoir (130, 131) pour les soupapes (110, 111).

8. Dispositif de soupape (100) selon l'une des revendications précédentes, dans lequel la commande électropneumatique (120) présente, pour chacune des soupapes (110, 111), une soupape magnétique (124, 125) destinée à commander une alimentation en air comprimé pour les soupapes (110, 111).

9. Véhicule, en particulier camion, présentant un dispositif de suspension pneumatique comportant un dispositif de soupape (100) selon l'une des revendications 1 à 8.
